# EUROPÄISCHE PATENTSCHRIFT

(11) **EP 0 487 968 B1**
(45) Veröffentlichungstag und Bekanntmachung des Hinweises auf die Patenterteilung: **12.04.1995**
(21) Anmeldenummer: 91119263.1
(22) Anmeldetag: 12.11.1991
(51) Int. Cl.: A01B 39/16

(54) **Bodenbearbeitungsmaschine**
Ground working machine
Dispositif de labourage du sol

(30) Priorität: 29.11.1990 DE 4038008; 05.11.1991 DE 4136328
(43) Veröffentlichungstag der Anmeldung: 03.06.1992
(73) Patentinhaber: Maschinenfabrik Bermatingen GmbH & Co., D-88697 Bermatingen (DE)
(72) Erfinder: Fleck, Alfons, W-7775 Bermatingen (DE)
(74) Vertreter: Engelhardt, Guido, Dipl.-Ing.

(56) Entgegenhaltungen:
- DE-A- 3 324 464
- DE-A- 3 507 475
- DE-C- 947 654
- FR-A- 1 417 207
- FR-A- 2 646 321
- NL-A- 7 803 278
- SE-C- 41 497
- US-A- 2 619 017
- US-A- 3 066 745
- US-A- 3 199 607

## Beschreibung

Die Erfindung bezieht sich auf eine Bodenbearbeitungsmaschine mit einem oder mehreren in einem Tragrahmen oder einem Schwenkarm gehaltenen und rotierend antreibbaren Werkzeugträgern, die mit Bodenbearbeitungswerkzeugen bestückt sind, wobei die einzelnen Bodenbearbeitungswerkzeuge jeweils als eine kreisförmige Scheibe ausgebildet sind, an einem Werkzeugträger zwei oder mehrere gleichmäßig über den Umfang verteilt angeordnete Bodenbearbeitungswerkzeuge angebracht sind, jedes Bodenbearbeitungswerkzeug auf einer Welle, die in einem mit dem Werkzeugträger verbundenen Halter abgestützt ist, um seine Rotationsachse verdrehbar gelagert ist, und die die Bodenbearbeitungswerkzeuge tragenden Wellen zur Rotationsachse des Werkzeugträgers geneigt verlaufend angeordnet sind, wobei die äußeren Bereiche der Bodenbearbeitungswerkzeuge den Boden bearbeiten.

Eine Bodenbenbearbeitungsmaschine dieser Art ist durch die DE-A1-33 24 464 bekannt. Die hierbei als Hohlscheiben ausgebildeten an einem durch einen gesonderten Motor um eine lotrechte Achse angetriebenen Werkzeugträger angebrachten Bodenbearbeitungswerkzeuge sind in der Weise angeordnet, daß deren Schneiden nahezu senkrecht zu der zu bear- beitenden Bodenoberfläche umlaufen, so daß bei einer Vorwärtsbewegung des Werkzeugträgers die Scheiben der Bodenbearbeitungswerkzeuge lediglich spiralförmig den Boden berühren oder in diesen eingreifen.

Durch die nahezu senkrecht stehenden Schneiden der Bodenbearbeitungswerkzeuge, auf die mitunter ein hoher Gegendruck einwirkt, wird der Boden oftmals zu stark aufgerissen, und es ist keine gleichmäßig tiefe Bearbeitung möglich. Vor allem aber ist beim Einsatz mit solchen Bodenbearbeitungswerkzeugen bestückter Maschinen von Nachteil, daß durch die umlaufenden Scheiben Steine und auch Bodenstücke weggeschldert werden, daß vielfach die Wurzeln der Kulturpflanzen, zwischen denen der Boden bearbeitet wird, beschädigt werden und daß zum Antrieb der Werkzeugträger eine hohe Antriebsleistung erforderlich ist. Beim Krümeln ist demnach die Unfallgefahr sehr groß, aufwendig bauende Vorkehrungen, insbesondere zum Schutz vor abgeschleuderten Steinen und um Verletzungen durch die mitunter mit hohen Geschwindigkeiten rotierenden Scheiben zu vermeiden, sind daher unumgänglich. Ferner ist von Nachteil, daß die zwangläufig angetriebenen Scheiben beim Aufschlagen auf einen Stein oder ein anderes Hindernis oftmals beschädigt werden, Betriebsunterbrechungen zur Behebung eines derartigen Schadens sind die Folge. Auch weisen diese Maschinen eine große Bauhöhe auf, eine Bearbeitung des Bodens unter herabhängenden Ästen ist demnach meist nicht möglich. Und bei hohem Unkrautbewuchs sind Verstopfungen der Werkzeugmaschine durch das aus dem Boden herausgerissene Unkraut nahezu unumgänglich. Eine zufriedenstellende Arbeitsweise ist, insbesondere bei wechselnden Arbeitsbedingungen, denen derartige Maschinen ausgesetzt sind, nicht gegeben.

Aufgabe der Erfindung ist es daher, eine Bodenbearbeitungsmaschine zu schaffen, die nicht nur in sehr vielseitiger Weise einsetzbar ist, sondern die auch hohe Arbeitsgeschwindigkeiten ermöglicht, ohne daß dabei Steine und Bodenstücke herausgerissen und weggeschleudert werden und ohne daß besondere Vorkehrungen zur Vermeidung von Unfällen erforderlich sind, und die eine äußerst zufriedenstellende gleichmäßige Bearbeitung des Bodens auch bei unterschiedlichen Bodenbeschaffenheiten ermöglicht. Der Boden soll somit nicht aufgerissen und abgetragen werden, auch sollen die Wurzeln der Kulturpflanzen, in deren Bereich eine Bodenbearbeitung erfolgt, nicht beschädigt werden, vielmehr soll die Bodenoberfläche in einem Arbeitsgang aufgeschnitten und geebnet, gewissermaßen geschält werden, so daß Unkraut zuverlässig zu entfernen ist. Des weiteren soll es möglich sein, daß Gras, das unmittelbar neben Bäumen oder anderen Hindernissen steht, den Bodenbearbeitungswerkzeugen zuzuführen, so daß auch dieses Gras abgemäht werden kann. Ferner sollen im unteren Bereich eines Baumes gewachsene Triebe entfernt werden können.

Der dazu erforderliche Bauaufwand soll gering gehalten werden, auch soll eine wirtschaftliche Fertigung zu bewerkstelligen sein, vor allem aber soll die zum Antrieb der Bodenbearbeitungsmaschine erforderliche Arbeitsleistung gering gehalten werden. Außerdem soll es nahezu ausgeschlossen sein, daß bei der Bearbeitung eines Bodens mit hohem Gras Verstopfungen im Bereich des Werkzeugträgers auftreten. Der Einsatzbereich soll demnach vielseitig sein, auch soll eine hohe Betriebssicherheit bei langer Lebensdauer der Werkzeuge und gleichmäßiger einstellbarer Arbeitstiefe gegeben sein.

Gemäß der Erfindung wird dies bei einer Bodenbearbeitungsmaschine der vorgenannten Art dadurch erreicht, daß die Bodenbearbeitungswerkzeuge als flache Scheiben ausgebildet sind und daß die Bodenbearbeitungswerkzeuge unter einem Winkel von 20 bis 40^{o} zur Bodenoberfläche ausgerichtet sind.

Sehr vorteilhaft ist es, wenn der Werkzeugträger eine in Fahrtrichtung oder entgegen der Fahrtrichtung der Bodenbearbeitungsmaschine geneigt verlaufende Rotationsachse aufweist.

Die Neigung des Werkzeugträgers kann in einfacher Weise dadurch bewerkstelligt werden, daß der Tragrahmen der Bodenbearbeitungsmaschine, beispielsweise mit Hilfe einer Servoeinrichtung, um eine etwa horizontal und senkrecht zur Fahrtrichtung verlaufenden, vorzugsweise an den Unterlenkern des Zugfahrzeuges vorgesehenen Achse verschwenkbar gehalten ist.

Die Bodenbearbeitungswerkzeuge einer Bodenbearbeitungsmaschine können gemeinsam an einem an dem Werkzeugträger befestigten Halter angebracht sein, der in Form eines Pyramiden- oder eines Kegelstumpfes ausgebildet ist, es ist aber auch möglich, diese jeweils an einem Halter anzubringen, der um eine horizontal verschwenkbare Achse, vorzugsweise entgegen der Kraft einer Feder, verstellbar an dem Werkzeugträger befestigt ist, wobei die Endlage der Halter jeweils durch einen Anschlag begrenzt und dieser in unterschiedlichen Winkelstellungen arretierbar sein kann.

Nach einer Weiterbildung können die Bodenbearbeitungswerkzeuge eines Werkzeugträgers auch in einem vorzugsweise abgewinkelt ausgebildeten Träger seitlich verschwenkbar gelagert sein, der gelenkig mit dem Werkzeugträger verbunden ist. Hierbei ist es angebracht, auf der die Bodenbearbeitungswerkzeuge getragenen Welle vertikal über den Träger ein Stützglied, z.B. in Form eines verdrehbar gelagerten Stützrades, anzuordnen.

Zweckmäßig ist es ferner, die an einem Werkzeugträger angebrachten Bodenbearbeitungswerkzeuge in unterschiedlichen Höhenlagen oberhalb und/oder unterhalb des Halters mit gleichem oder unterschiedlichem Abstand zu diesem anzuordnen oder diese mit unterschiedlichen Durchmessern zu versehen. Bei einem mit sechs Bodenbearbeitungswerkzeugen bestückten Werkzeugträger beispielsweise sollten die jeweils gegenüberliegenden Bodenbearbeitungswerkzeuge in unterschiedlichen Höhenlagen angeordnet sein.

Angebracht ist es auch, den Werkzeugträger an seiner Unterseite mit einem vorzugsweise in der Höhe verstellbaren und in Form eines Gleittellers ausgebildeten Anschlag zur Einstellung der Eingriffstiefe der Bodenbearbeitungswerkzeuge auszustatten.

Bei mehreren in einem Tragrahmen angeordneten Werkzeugträgern sollten diese in Fahrtrichtung derart versetzt zueinander angeordnet sein, daß sich die Arbeitsbereiche der Bodenbearbeitungswerkzeuge in den Randbereichen überdecken.

Die Bodenbearbeitungswerkzeuge können in Form von gezahnten Scheiben, als scheibenförmige Messer oder als mit Bürsten oder Federzinken bestückte Scheiben ausgebildet werden.

Nach einer Weiterbildung ist, um das zwischen Hindernissen oder nahe bei diesen stehende Gras den Bodenbearbeitungswerkzeugen zuzuführen und somit ebenfalls mähen zu können, vorgesehen, vertikal über den Bodenbearbeitungswerkzeugen ein Putzwerkzeug in Form eines um eine vertikal gerichtete Achse rotierend antreibbares Bürstenrades oder einer um eine horizontal gerichtete Achse rotierend antreibbaren Bürstenwalze anzuordnen, dessen Bürsten zumindest auf einer Seite über den Arbeitsbereich der Bodenbearbeitungswerkzeuge überstehen.

Nach einer bevorzugten Ausführungsform kann das Bürstenrad konzentrisch zu dem Werkzeugträger unmittelbar an diesem oder einem diesem zugeordneten Tragrahmen, beispielsweise einem Schwenkarm, angeordnet sein, wobei das Bürstenrad drehfest mit dem Werkzeugträger verbunden sein kann. Die Bürsten sollten hierbei parallel zu den zur Rotationsachse des Werkzeugträgers geneigt angeordneten Bodenbearbeitungswerkzeugen verlaufend ausgerichtet sein.

Nach einer andersartigen Ausgestaltung ist es aber auch möglich, das Bürstenrad exzentrisch zu dem Werkzeugträger in dessen äußeren Bereich drehbar zu lagern und trieblich mit dem Werkzeugträger, beispielsweise über einen Ketten- oder Riementrieb,zu verbinden.

Die Bürstenwalze sollte zweckmäßigerweise auf einer in Fahrtrichtung nach außen geneigt verlaufenden Welle angeordnet sein, die mittels eines hydraulisch betätigbaren Rotationsmotors angetrieben werden kann.

Vorteilhaft ist es ferner, das Bürstenrad oder die Bürstenwalze auf einem an dem Tragrahmen oder dem Schwenkarm abgestützten Hebel anzuordnen, der mittels einer Servoeinrichtung vorzugsweise um die Achse des Werkzeugträgers gesteuert verschwenkbar ist. Um das Bürstenrad oder die Bürstenwalze in Betriebsstellung zu bringen, ist es nach einer anderen Ausgestaltung aber auch möglich, diese an einem an dem Tragrahmen oder dem Schwenkarm vorgesehenen Schlitten anzubringen, der mittels einer Servoeinrichtung vorzugsweise radial nach außen gesteuert verstellbar ist.

Das Bürstenrad sollte, um den Bodenbearbeitungswerkzeugen das zu mähende Gras zuzuführen, mit gleicher Drehrichtung wie der Werkzeugträger angetrieben werden.

Bei einem an einem Schwenkarm angeordneten und mit einem Tastfühler versehenen Werkzeugträgers ist es des weiteren angebracht, das Bürstenrad oder die Bürstenwalze derart anzuordnen bzw. zu bemessen, daß dessen Bürsten nach außen über den Arbeitsbereich des Tastfühlers überstehen und diesen an ein Steuergerät anzuschließen, mittels dem die dem Bürstenrad oder der Bürstenwalze zugeordnete Servoeinrichtung derart betätigbar ist, daß bei einer Verstellbewegung des Tastfühlers das Bürstenrad oder die Bürstenwalze in Betriebsstellung ausfahrbar ist.

Die Bürsten des Bürstenrades können jeweils aus einem oder mehreren radial gerichteten an einer Scheibe angebrachten und in Umfangsrichtung elastisch verformbaren, vorzugszweise in Umfangsrichtung gekrümmt ausgebildeten Stäben oder Bändern aus einem witterungsbeständigen Kunststoff, die Bürstenwalze durch eine Vielzahl von jeweils mit einem Ende an der antreibbaren Welle angebrachter Gummilappen gebildet sein.

Wird eine Bodenbearbeitungsmaschine gemäß der Erfindung ausgebildet, in dem an einem angetriebenen Werkzeugträger zwei oder mehrere jeweils gesondert auf einer geneigt verlaufenden Welle drehbar gelagerte scheibenförmige Bodenbearbeitungswerkzeuge angebracht werden, so ist eine saubere Bodenbearbeitung möglich, ohne daß dabei Bodenstücke und Steine herausgerissen und weggeschleudert werden. Mittels der um die Rotationsachse des Werkzeugträgers zwar umlaufenden, auf den Wellen aber frei drehbar gelagerten Werkzeugen ist dabei eine intensive und gleichmäßige Bearbeitung des Bodens bei gleichbleibender Arbeitstiefe gewährleistet. Die Werkzeuge wälzen sich hierbei aber entgegen der Drehrichtung des Werkzeugträgers auf dem Boden ab, so daß Bodenteile und Steine von den Werkzeugen nicht mitgenommen werden. Die Bodenoberfläche wird somit durch die Bodenbearbeitungswerkzeuge in deren Arbeitsbereich aufgeschnitten, das zu entfernende Unkraut wird somit zuverlässig unterhalb der Bodenoberfläche abgeschnitten, ohne daß dabei die Wurzeln der Kulturpflanzen, in deren Bereich gearbeitet wird, beschädigt werden. In dem hinteren Bereich der Arbeitsmaschine wird dagegen der Boden durch die Werkzeuge geebnet.

Da die scheibenförmig ausgebildeten Bodenbearbeitungswerkzeuge nicht zwangläufig angetrieben werden, ist auch der Verschleiß an diesen gering. Durch die Abwälzbewegungen greifen vielmehr jeweils andere Bereiche in den Boden ein, die Abnutzung ist demnach gleichmäßig über den Umfang der Werkzeuge verteilt bzw. diese werden dadurch selbsttätig geschärft. Auch sind Beschädigungen an Werkzeugen, da sich diese an Steinen oder ähnlichen Hindernissen abwickeln, nahezu ausgeschlossen, so daß ein störungsfreier Betrieb über eine lange Zeitdauer gewährleistet ist.

Des weiteren ist von Vorteil, daß durch Neigung des Werkzeugträgers in Fahrtrichtung die Werkzeuge eine Zugkraft ausüben und sich somit in das Erdreich eingraben, die Bodenbearbeitung ist auf diese Weise weiter zu verbessern. Und da die Bodenbearbeitungswerkzeuge nicht selbst angetrieben sind und durch diese daher auch keine Steine und Bodenstücke aus dem Erdreich herausgerissen und abgeschleudert werden, sind keine besonderen Vorkehrungen zur Vermeidung von dadurch bedingten Unfällen erforderlich. Vor allem aber ist von Vorteil, daß die Leistung zum Antrieb des Werkzeugträgers gering gehalten werden kann, daß aber dennoch hohe Arbeitsgeschwindigkeiten, und zwar auch bei unterschiedlichen Bodenbeschaffenheiten, möglich sind. Des weiteren werden Wurzelstücke, Unkraut und Gras von den Werkzeugen nicht mitgenommen, Verstopfungen im Bereich des Werkzeugträgers sind daher nahezu ausgeschlossen. Die vorschlagsgemäß ausgebildete Bodenbearbeitungsmaschine ermöglicht somit trotz geringem Bauaufwand und niederer Antriebsleistung bei einfacher Handhabung eine sehr zufriedenstellende Bodenkultivierung, insbesondere im Obst- und Gemüsebau sowie in Beerenkulturen.

Wird nach der vorgesehenen Weiterbildung einem Werkzeugträger ein Putzwerkzeug in Form eines Bürstenrades oder einer Bürstenwalze zugeordnet, so ist es ferner möglich, in einem Arbeitsgang nicht nur eine Bodenbearbeitung vorzunehmen, sondern auch das zwischen Baumstämmen oder anderen Hindernissen und nahe bei diesen stehende Gras den Bodenbearbeitungswerkzeugen zuzuführen und mittels diesen zu mähen. Des weiteren können im unteren Bereich eines Baumes ausgewachsene Triebe mit Hilfe des Putzwerkzeuges leicht entfernt werden. Nacharbeiten von Hand entfallen somit gänzlich. Und da das Putzwerkzeug nur bei Bedarf eingesetzt werden kann, ist dieses auch keinem hohen Verschleiß unterworfen.

In der Zeichnung sind einige Ausführungsbeispiele der gemäß der Erfindung ausgebildeten Bodenbearbeitungsmaschine dargestellt, die nachfolgend im einzelnen erläutert sind. Hierbei zeigt:
- Figur 1: eine an ein Zugfahrzeug angebaute Bodenbearbeitungsmaschine, in Draufsicht,
- Figur 2: die Bodenbearbeitungsmaschine nach Figur 1, in Seitenansicht und in einer vergrößerten Darstellung,
- Figuren 3, 4 und 5: den Werkzeugträger der Bodenbearbeitungsmaschine nach Figur 1 in unterschiedlichen Ausgestaltungen, jeweils in einem Axialschnitt,
- Figur 6: einen Werkzeugträger mit verschwenkbar angebrachten Bodenbearbeitungswerkzeugen, in Draufsicht,
- Figur 7: einen Teil des Werkzeugträgers nach Figur 6, in einer Seitenansicht
- Figur 8: einen Werkzeugträger mit in unterschiedlichen Rotationsebenen angeordneten Bodenbearbeitungswerkzeugen,
- Figur 9: einen Schnitt nach Linie IX - IX der Figur 8,
- Figur 10: eine mit mehreren seitlich versetzt zueinander angeordneten Werkzeugträgern bestückte Bodenbearbeitungsmaschine, in Draufsicht,
- Figur 11: eine als Rasenmäher verwendbare Bodenbearbeitungsmaschine, in einem Längsschnitt,
- Figuren 12 bis 16: unterschiedliche gestaltete Bodenbearbeitungswerkzeuge, jeweils in Draufsicht,
- Figur 17: einen mit Bodenbearbeitungswerkzeugen bestückten an einem Schwenkarm angebrachten Werkzeugträger, dem ein Bürstenrad als Putzwerkzeug zugeordnet ist, in Draufsicht,
- Figur 18: die Bodenbearbeitungsmaschine nach Figur 17, in einem Axialschnitt,
und
- Figuren 19 und 20: Bodenbearbeitungsmaschinen gemäß Figur 17 mit einem ausschwenkbar angeordneten Bürstenrad bzw. einer radial verstellbar angeordneten Bürstenwalze als Putzwerkzeuge.

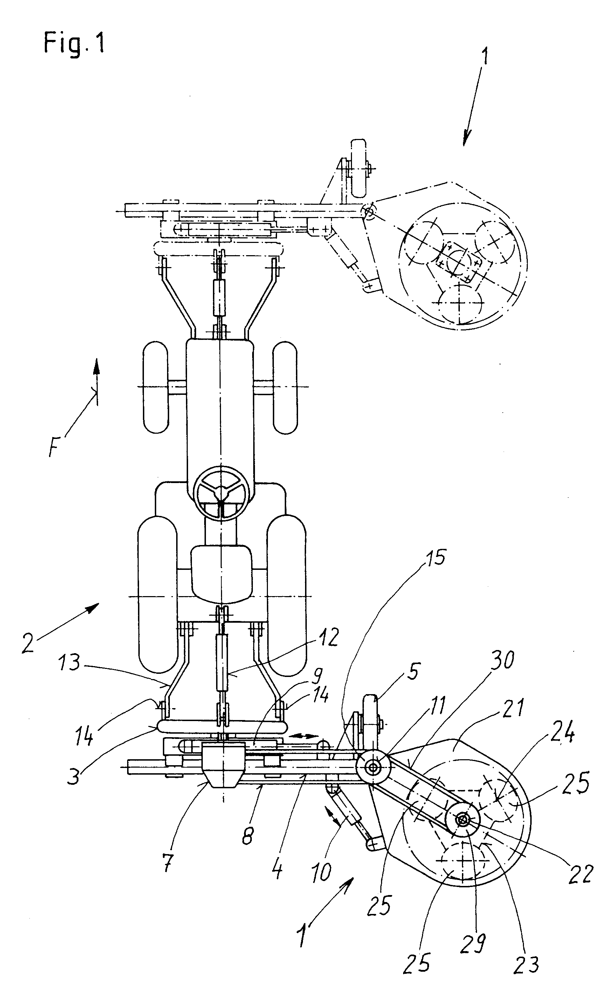

Die in Figur 1 dargestellte und mit 1 bezeichnete Bodenbearbeitungsmaschine ist an einem Zugfahrzeug 2 in Form eines Schleppers an dessen Heckseite - oder gemäß der strichpunktierten Darstellung an dessen Frontseite - angebracht und dient zur intensiven und gleichmäßigen Bearbeitung des Bodens B. An einer mittels eines Zylinders 9 seitlich verschiebbaren Halterung 4 ist hierbei ein Tragrahmen 21 an dem Zugfahrzeug 2 abgestützt, der einen mit Bodenbearbeitungswerkzeugen 25 versehenen Werkzeugträger 22 trägt. Zum Antrieb des Werkzeugträgers 22 ist ein über ein Getriebe 7 mit der Zapfwelle 6 des Zugfahrzeuges 2 trieblich verbundener Riementrieb 8 vorgesehen, mittels dem eine auf einer Welle 11 angeordnete Riemenscheibe 15 antreibbar ist. Über einen weiteren Riementrieb 30 ist die zugeführte Antriebsenergie auf eine auf dem Werkzeugträger 22 angeordnete und mit diesem trieblich verbundene Riemenscheibe 29 übertragbar. Mit Hilfe eines Zylinders 10 kann die an dem Rahmen 3 des Zugfahrzeuges 2 befestigte und über ein Laufrad 5 abgestützte Bodenbearbeitungsmaschine 1 mehr oder weniger ausgeschwenkt werden.

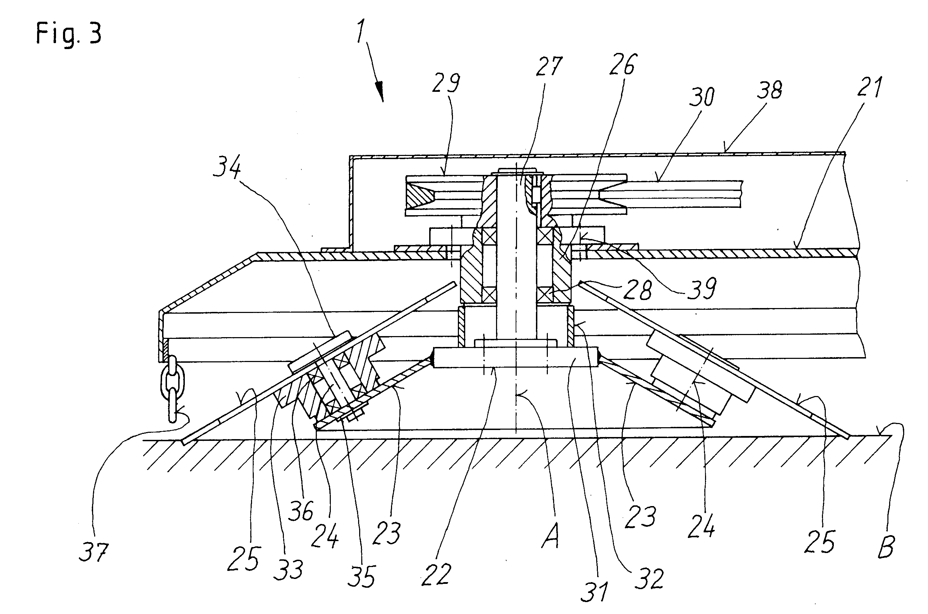

Die Bodenbearbeitungsmaschine 1 ist, wie dies im einzelnen den Figuren 3 bis 5 zu entnehmen ist, aus zwei oder mehreren an dem Werkzeugträger 22 angebrachte und gleichmäßig über den Umfang verteilt angeordnete scheibenförmige Bodenbearbeitungswerkzeuge 25 gebildet, die jeweils auf einer Welle 24 drehbar gelagert sind, die geneigt zur Rotationsachse A des Werkzeugträgers 22 verlaufen. Zur Halterung der Wellen 24 dient ein pyramidenförmig gestalteter Halter 23, der an dem Werkzeugträger 22 angeschweißt ist. Die Wellen 24 sind hierbei mit einem Bund 34 ausgestattet und mittels Lager 36 drehbar in einem Gehäuse 33 gelagert, zwischen dem und dem Bund 34 jeweils ein Bodenbearbeitungswerkzeug 25 eingespannt ist. Durch Sprengringe 35 sind die den Halter 23 durchgreifenden Wellen 24 gesichert.

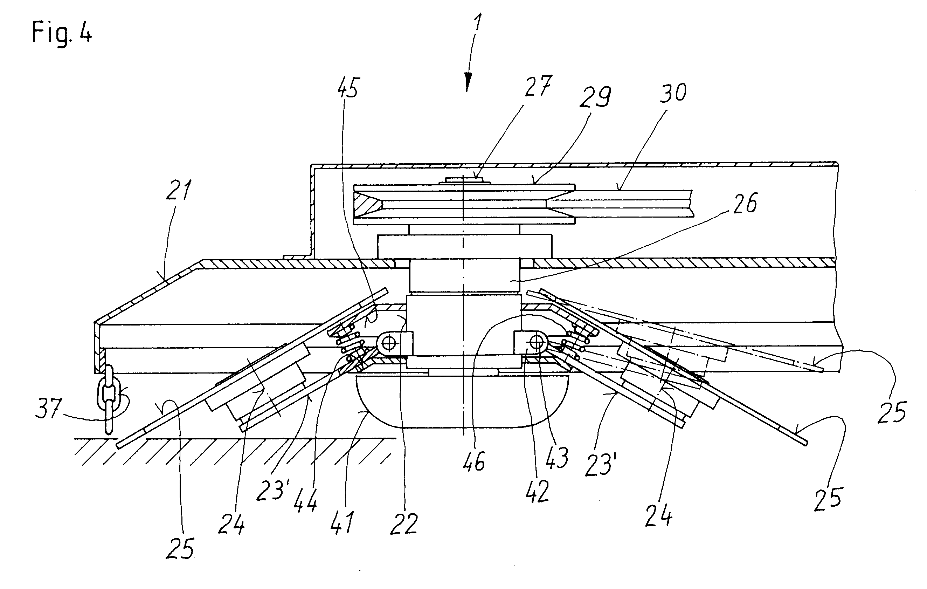

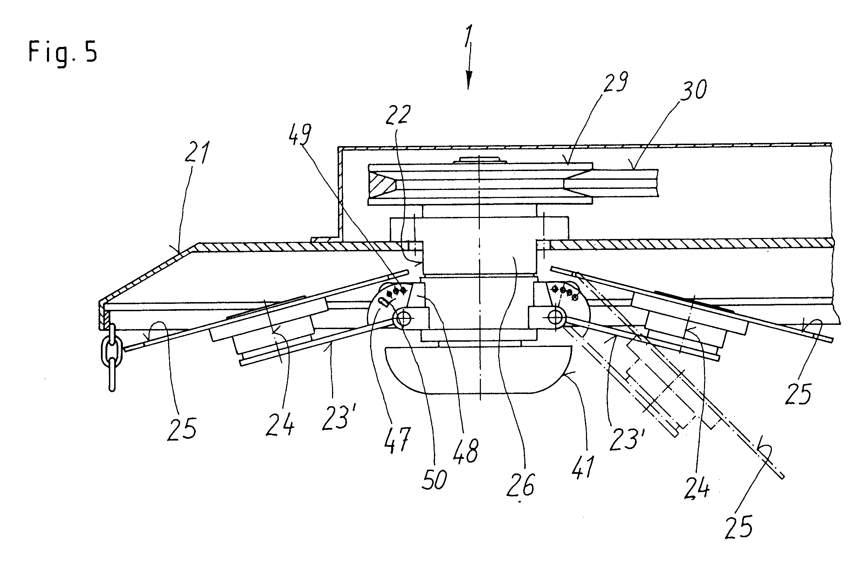

Der um seine Rotationsachse A antreibbare Werkzeugträger 23 ist mittels einer Welle 27, die die Riemenscheibe 29 trägt, sowie Wälzlager 28 in einem Gehäuse 26 drehbar gelagert, das durch Schrauben 39 fest mit dem Tragrahmen 21 verbunden ist. Außerdem weist der Werkzeugträger 22 einen Flansch 31, an dem der Halter 23 angeschweißt ist, sowie eine auf dem Flansch 31 abgestützte Hülse 32 als Wickelschutz auf. Ferner sind an dem Tragrahmen 21 in dessen äußeren Bereich zur Abdeckung der Bodenbearbeitungswerkzeuge 25 Ketten 37 angebracht, und auf den Tragrahmen 21 ist eine Haube 38 aufgesetzt, durch die die Riemenscheibe 29 sowie der Riementrieb 30 abgedeckt sind. Und um sicherzustellen, daß stets ein gleichmäßig tiefer bzw. nicht zu tiefer Eingriff der Bodenbearbeitungswerkzeuge 25 in den Boden B gewährleistet ist, ist bei den Ausgestaltungen nach den Figuren 4 und 5 an dem Werkzeugträger 22 ein Anschlag in Form eines Gleittellers 41 angebracht, der in der Höhe einstellbar ausgebildet sein kann und gegebenenfalls auf dem Boden B aufliegt.

Bei der Ausführungsform nach Figur 3 ist der Halter 23 starr an dem Werkzeugträger 22 befestigt, die Bodenbearbeitungswerkzeuge 25 sind somit in ihrer Lage nicht veränderbar. Gemäß Figur 4 kann zur Abstützung der einzelnen Bodenbearbeitungswerkzeuge 25 aber auch jeweils ein Halter 23' vorgesehen werden, der mittels eines Gelenkbolzens 43 um dessen Achse verschwenkbar an einer an dem Werkzeugträger 22 befestigten Lasche 42 gehalten ist. Beim Auftreffen auf ein Hindernis können die einzelnen Bodenbearbeitungswerkzeuge 25, wie dies in der rechten Hälfte der Figur 4 strichpunktiert eingezeichnet ist, somit gegebenenfalls nach oben ausweichen.

Zur Rückführung der Halter 23' in ihre Ausgangslage sind hierbei Druckfedern 46 vorgesehen, die sich einerseits jeweils an einem an dem Werkzeugträger 22 befestigten Steg 45 und andererseits an dem Halter 23' abstützen, so daß dieser durch die Kraft der Druckfeder 46 an einen ebenfalls an dem Werkzeugträger 22 angebrachten Anschlag 44 angelegt wird und somit eine definiert Lage einnimmt.

Die Bodenbearbeitungswerkzeuge 25 können aber auch in unterschiedlichen Winkelstellungen zu der Rotationsachse A des Werkzeugträgers 22 arretiert werden. Dazu dienen gemäß der Darstellung in Figur 5 an den Haltern 23' angebrachte Platten 47 sowie an dem Gehäuse 26 des Werkzeugträgers 22 befestigte seitlich abstehende Platten 48, die mit einander zugeordneten Ausnehmungen 49 versehen sind. Mit Hilfe eines in zwei deckungsgleiche Ausnehmungen 49 einführbaren Stiftes 50 ist eine Arretierung auf einfache Weise zu bewerkstelligen.

Wird der Werkzeugträger 22 der Bodenbearbeitungsmaschine 21 angetrieben und somit in Rotation versetzt, so wird durch die Bodenbearbeitungswerkzeuge 25, die aufgrund der geneigten Anordnung der Wellen 24 in ihren äußeren Bereichen jeweils eine Arbeitsfläche bilden, der Boden B im oberen Bereich gewissermaßen aufgeschnitten, ohne daß dabei Bodenstücke oder Steine weggeschleudert werden. Die drehbar auf den Wellen 24 gelagerten Bodenbearbeitungswerkzeuge 25 werden hierbei zwar um die Rotationsachse A des Werkzeugträgers 22 bewegt, am Boden wälzen sich diese aber entgegen ihrer Rotationsbewegung ab, so daß die Wurzeln des zu entfernenden Unkrautes zwar unterhalb der Bodenoberfläche abgeschnitten werden, das gelöste Erdreich aber liegen bleibt und nicht abgetragen wird. Und durch die über das gelöste Erdreich hinweggeführten Bodenbearbeitungswerkzeuge 25 kann dieses gegebenenfalls zusätzlich zerkleinert und geglättet werden. Eine intensive und gleichmäßige Bodenbearbeitung bei gleichbleibender Arbeitstiefe ist somit gewährleistet.

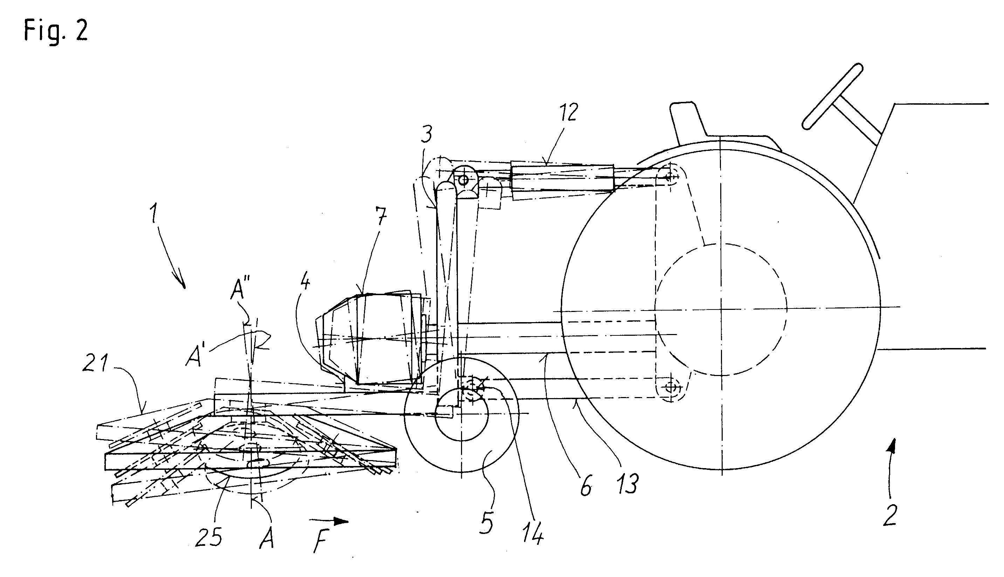

Des weiteren kann der Tragrahmen 21 des Zugfahrzeuges 2 in Fahrtrichtung F geneigt werden, so daß, wie dies in Figur 2 strichpunktiert eingezeichnet ist, die Rotationsachse A des Werkzeugträgers 22 in Fahrtrichtung F (Achse A') oder entgegen der Fahrtrichtung F (Achse A'') des Zugfahrzeuges 2 geneigt verläuft. Der Rahmen 3 ist dazu mittels zweier Bolzen 14 an den Unterlenkern 13 des Zugfahrzeuges 2 um eine horizontale Achse verschwenkbar gehalten und mit Hilfe einer Servoeinrichtung 12 verstellbar.

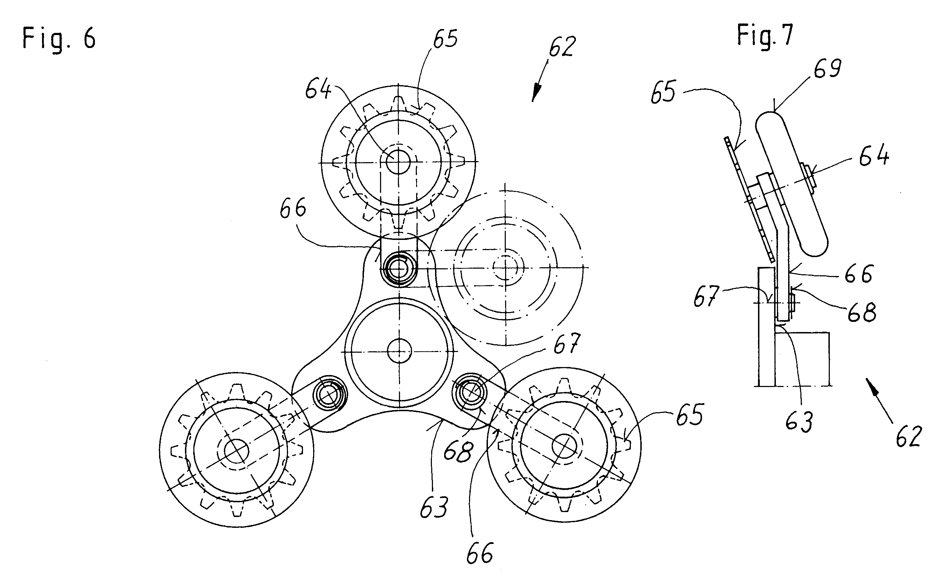

Bei dem Werkzeugträger 62 gemäß den Figuren 6 und 7 sind die Bodenbearbeitungswerkzeuge 65 seitlich verschwenkbar an einem Halter 63 angebracht. Dazu dient jeweils ein abgewinkelt ausgebildeter Träger 66, der auf einer an dem Halter 63 vorgesehenen Welle 67 entgegen der Kraft einer Feder 68 verschwenkbar ist.

Die die Bodenbearbeitungswerkzeuge 65 tragenden Wellen 64 sind wiederum zur Rotationsachse des Werkzeugträgers 62 geneigt verlaufend angeordnet, so daß die Bodenbearbeitungswerkzeuge 65 in ihren äußeren Bereichen Arbeitsflächen bilden. Außerdem sind über den Trägern 66 Stützglieder 69 in Form von drehbar gelagerten Stützrädern angebracht, durch ein im Arbeitsbereich des Werkzeugträgers 62 befindliches Hindernis können somit die Bodenbearbeitungswerkzeuge 65 aufgrund der gelenkigen Halterung mittels des Trägers 66 entsprechend der strichpunktierten Darstellung eingeschwenkt werden.

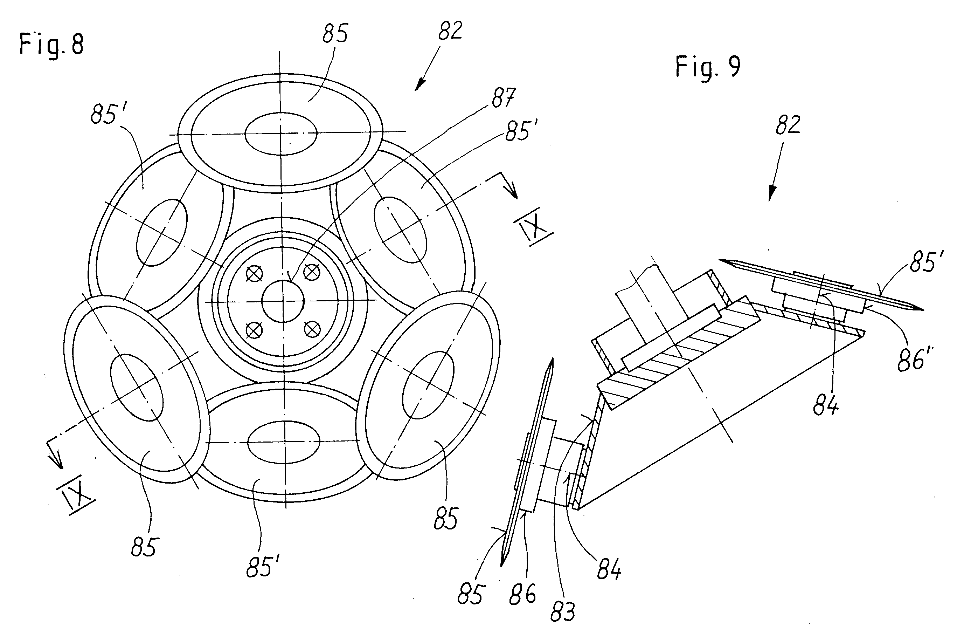

Der in den Figuren 8 und 9 dargestellte Werkzeugträger 82 weist sechs Bodenbearbeitungswerkzeuge 85, 85' auf, von denen die jeweils diametral einander gegenüberliegenden Bodenbearbeitungswerkzeuge in unterschiedlichen Höhenlagen angeordnet sind und somit in unterschiedlichen Rotationsebenen arbeiten. Die die Welle 84 aufnehmenden Gehäuse 86, 86' sind, um dies zu bewerkstelligen, unterschiedlich hoch bemessen, so daß der Abstand zwischen einem die Bodenbearbeitungswerkzeuge 85, 85' tragenden Halter 83 und den Bodenbearbeitungswerkzeugen 85 bzw. 85' unterschiedlich groß sind.

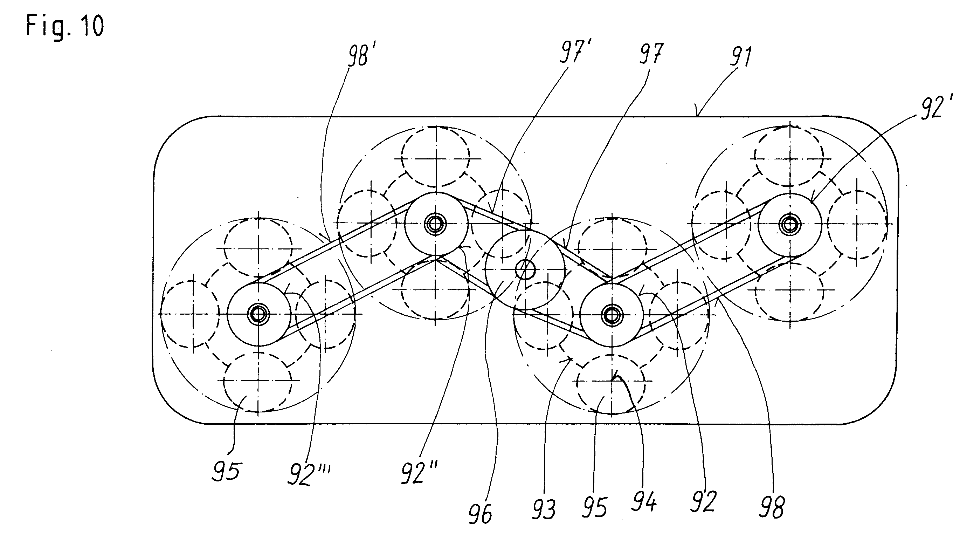

Bei dem Ausführungsbeispiel nach Figur 10 sind in einem Tragrahmen 91 mehrere seitlich nebeneinander angeordnete Werkzeugträger 92, 92', 92'' und 92''' eingebaut, die derart zueinander versetzt angeordnet sind, daß sich deren Arbeitsbereiche in den Randbereichen überdecken. Die jeweils an einem Halter 93 angebrachten um eine geneigt zur Rotationsachse der Werkzeugträger 92, 92', 92'' und 92''' ausgerichteten Welle 94 drehbar gelagerten Bodenbearbeitungswerkzeuge 95 sind gemeinsam antreibbar. Dazu ist eine trieblich mit einer zugeordneten Zugmaschine verbindbare Antriebsscheibe 96 vorgesehen, die über Riementriebe 97 und 97' mit den Werkzeugträgern 92 und 92'' verbunden ist. Und diese wiederum sind über Riementriebe 98 und 98' mit den Werkzeugträgern 92' und 92''' gekoppelt.

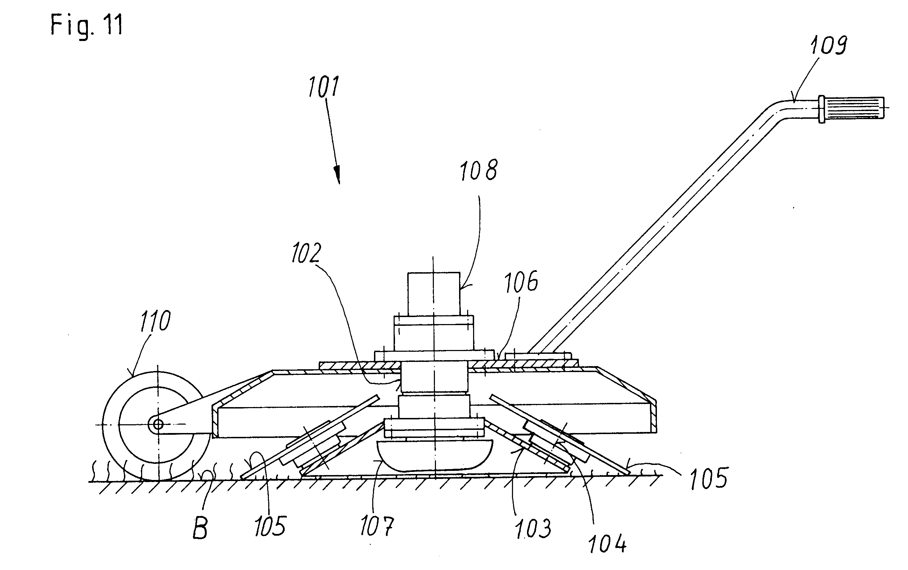

Das in Figur 11 dargestellte Bodenbearbeitungsgerät 101 ist als Rasenmäher verwendbar und besteht ebenfalls aus einem Werkzeugträger 102, an dem ein pyramidenförmig gestalteter Halter 103 angebracht ist, der mehrere auf Wellen 104 gelagerte Bodenbearbeitungswerkzeuge 105 trägt. Die Wellen 104 sind auch bei dieser Ausgestaltung derart zur Rotationsachse des Werkzeugträgers 102 geneigt, daß deren äußere Bereiche Arbeitsflächen bilden.

Zum Antrieb des in einem Gehäuse 106 eingebauten Werkzeugträgers 102 dient ein Motor 108, der auf dem Gehäuse 106 befestigt ist. Außerdem ist das Gehäuse 106 mit einem Griffstück 109 sowie einem Laufrad 110 ausgestattet, und an dem Werkzeugträger 102 ist ein Anschlag in Form eines Gleittellers 107 angebracht, das Bodenbearbeitungsgerät 101 kann somit von Hand über den Boden B bewegt werden, um mittels der rotierend durch den Werkzeugträger 102 angetriebenen Bodenbearbeitungswerkzeuge 105 Gras zu mähen oder bei entsprechender Arbeitstiefe den Boden aufzulockern.

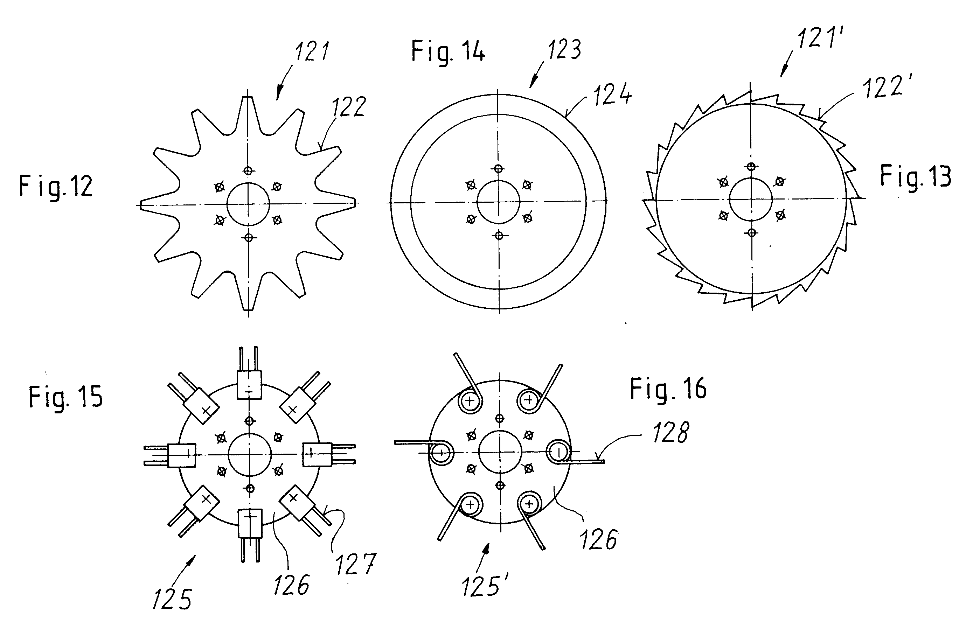

In den Figuren 12 bis 15 sind mögliche Ausgestaltungen der bei den Bodenbearbeitungsmaschinen nach den Figuren 1 bis 11 einsetzbaren Bodenbearbeitungswerkzeuge dargestellt. Gemäß den Figuren 12 und 13 sind die Bodenbearbeitungswerkzeuge 121 bzw. 121' als verzahnte Scheiben 122 bzw. 122' ausgebildet, nach Figur 14 besteht das Bodenbearbeitungswerkzeug 123 aus einem Scheibenmesser 124. Nach den Darstellungen der Figuren 15 und 16 ist es aber auch möglich, die Bodenbearbeitungswerkzeuge 125 bzw. 125' aus Scheiben 126 herzustellen, an denen nach außen abstehende Bürsten 127 bzw. federnde Zinken 128 angebracht sind.

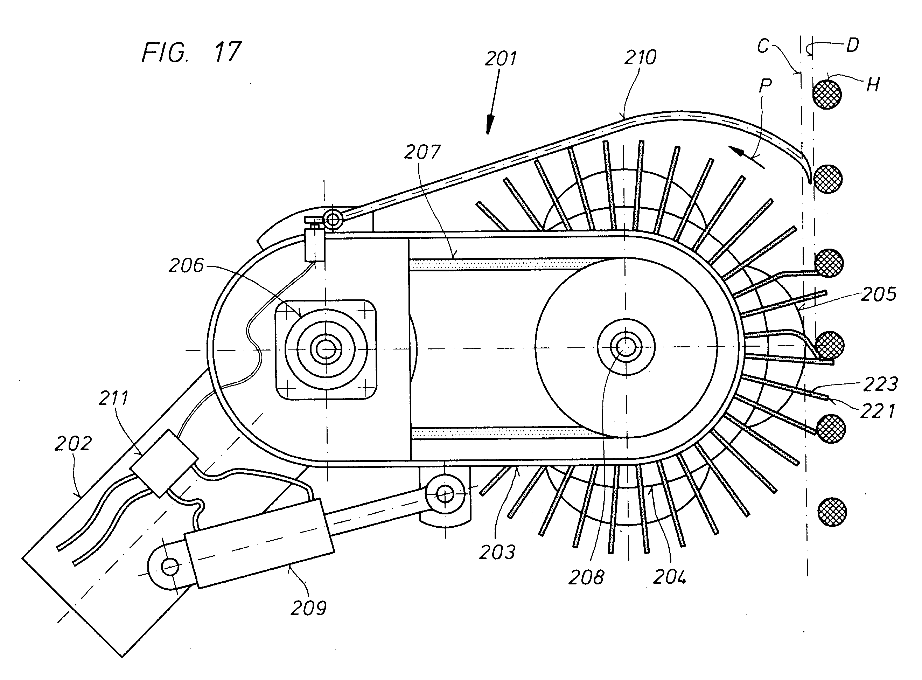

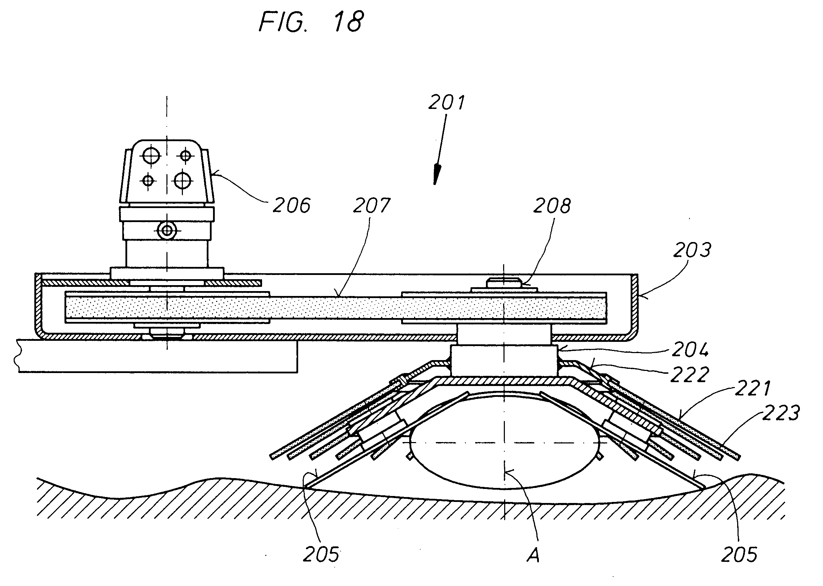

Bei dem in den Figuren 17 und 18 dargestellten Randstreifenmäher 201 ist an einem Tragrahmen 202 ein Schwenkarm 203 angelenkt, an dem ein mit scheibenförmig ausgebildeten Bodenbearbeitungswerkzeugen 205 bestückter Werkzeugträger 204 angebracht ist. Mittels eines Motors 206 und einem Riementrieb 207 ist der mittels einer Welle 208 drehbar gelagerte Werkzeugträger 204 um die Achse A in Richtung des Pfeiles P antreibbar.

An dem Schwenkarm 203 ist des weiteren ein vor dem Werkzeugträger 204 angeordneter Tastfühler 210 angebracht, der an eine Servoeinrichtung 211 angeschlossen ist. Trifft der Tastfühler 210 auf ein Hindernis H, beispielsweise einen Baumstamm, und wird somit durch dieses eingeschwenkt, so wird durch das Steuergerät 211 eine Servoeinrichtung 209 aktiviert, mittels der der Schwenkarm 203 und mit diesem auch die Bodenbearbeitungswerkzeuge 205 des Werkzeugträgers 204 ebenfalls eingeschwenkt werden, so daß Beschädigungen an den Werkzeugen 205 durch das Hindernis vermieden sind.

Um aber auch das zwischen den Hindernissen H stehende Gras sowie das unmittelbar neben diesen gewachsene Gras mähen zu können, ist vertikal über den Bodenbearbeitungswerkzeugen 205 ein Putzwerkzeug in Form eines Bürstenrades 221 angeordnet, mittels dem das Gras den Bodenbearbeitungswerkzeugen 205 zugeführt wird. Die Bürsten 223 des Bürstenrades 221 sind hierbei durch elastisch verformbare Stäbe oder Bänder aus einem witterungsbeständigen Kunststoff gebildet, die, wie dies insbesondere der Figur 18 zu entnehmen ist, an einer Scheibe 222 angebracht sind.

Da das Bürstenrad 221 fest mit dem Werkzeugträger 204 verbunden ist und somit zusammen mit diesem in Richtung des Pfeiles P umläuft, wird das von den Bürsten 223 erfaßte Gras in Richtung der scheibenförmig ausgebildeten Bodenbearbeitungswerkzeugen 205 umgelenkt und kann demnach von diesen abgemäht werden. Mit dem Randstreifenmäher 201 werden daher in einem Arbeitsgang nicht nur eine Bodenbearbeitung in dem durch die mit C bezeichnete Linie gekennzeichneten Bereich vorgenommen, sondern es wird auch der durch die Linie D gekennzeichnete bis an die Hindernisse H sich erstreckende Bereich sowie das Feld zwischen den Hindernissen H gesäubert.

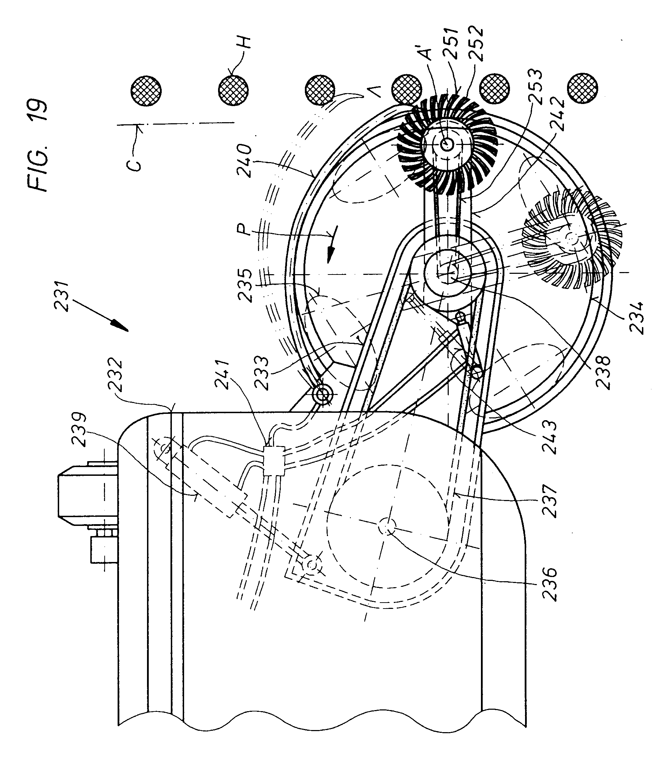

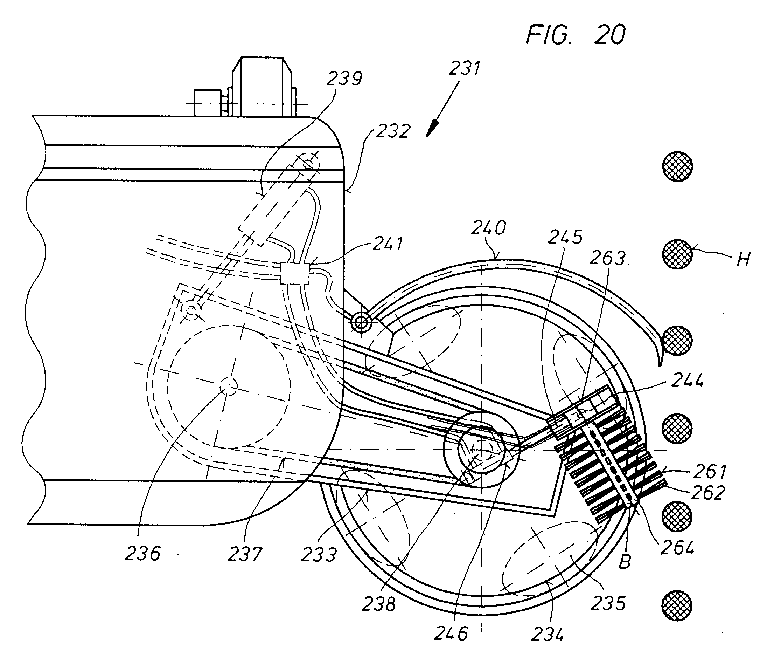

Bei der in den Figuren 19 und 20 dargestellten Mulchmaschine 231 ist, um das zwischen den Hindernissen H stehende Gras den an einem Werkzeugträger 234 angeordneten Bodenbearbeitungswerkzeugen 235 zuzuführen, ein Bürstenrad 251 bzw. eine Bürstenwalze 261 vorgesehen. Der Werkzeugträger 234 ist wiederum an einen Schwenkarm 233, der an einem Gehäuse 232 der Mulchmaschine 231 schwenkbar gehalten ist, angebracht und mittels eines Riementriebes 237 antreibbar. Die Antriebsenergie wird hierbei von einer rotierend angetriebenen Welle 236 abgenommen und einer Welle 238 zugeführt, mit der der Werkzeugträger 234 fest verbunden und somit in Richtung des Pfeiles P antreibbar ist. Mit Hilfe einer Servoeinrichtung 239 ist der Schwenkarm 237 verstellbar.

Das Bürstenrad 252 ist in einem Hebel 242 drehbar gelagert, der schwenkbar auf der Welle 238 angeordnet ist. Zum Verschwenken des Hebels 242 dient eine Servoeinrichtung 243, die mit Hilfe eines Steuergerätes 241 betätigt wird. Des weiteren ist an das Steuergerät 241 ein Tastfühler 240 angeschlossen.

Wird der Tastfühler 240 durch Anlage an einem Hindernis H eingeschwenkt, so wird mit Hilfe des Steuergerätes 241 die Steuereinrichtung 243 derart betätigt, daß der Hebel 242 und mit diesem das Bürstenrad 251 in die strichpunktierte Betriebsstellung ausgeschwenkt werden. Durch die über den Arbeitsbereich C des Werkzeugträgers 234 überstehenden Bürsten 252 des mit Hilfe eines Riementriebes 253 um eine vertikale Achse A' in Richtung des Werkzeugträgers 234 antreibbaren Bürstenrades 251 wird das zwischen und nahe bei den Hindernissen H stehende Gras den Bodenbearbeitungswerkzeugen 235 zugeführt, so daß dieses von diesen mit abgemäht werden kann.

Die gemäß Figur 20 als Putzwerkzeug vorgesehene Bürstenwalze 261 ist durch einen von einem Druckmedium beaufschlagbaren Motor 263 um eine horizontal gerichtete Achse B antreibbar und durch eine Servoeinrichtung 246 nach außen verschiebbar. Der mit einer Welle 264, an der die als Lappen ausgebildeten Bürsten 262 der Bürstenwalze 261 angebracht ist, verbundenen Motor 263 ist dazu als Schlitten 244 ausgebildet, und an dem Schwenkarm 233 ist eine diesen aufnehmende Führung 245 vorgesehen. Durch den Tastfühler 240 ist das Steuergerät 241 wiederum derart steuerbar, daß beim Einschwenken des Tastfühlers 240 die Bürstenwalze 261 mit Hilfe der Servoeinrichtung 246 in die dargestellte Betriebsstellung ausgefahren wird.

## Patentansprüche

1. Bodenbearbeitungsmaschine (1; 101; 201; 231) mit einem oder mehreren in einem Tragrahmen (21; 91; 106) oder einem Schwenkarm (203; 233) gehaltenen und rotierend antreibbaren Werkzeugträgern (22; 62; 82; 92; 102; 204; 234), die mit scheibenförmig ausgebildeten Bodenbearbeitungswerkzeugen (25; 65; 85, 85'; 95; 105; 121, 121'; 123; 125, 125'; 205; 235) bestückt sind, wobei die einzelnen Bodenbearbeitungswerkzeuge (25; 65; 85, 85', 95; 105; 121, 121'; 123; 125, 125'; 205; 235) jeweils als eine kreisförmige Scheibe ausgebildet sind, an einem Werkzeugträger (22; 62: 82: 92; 102; 204; 234) zwei oder mehrere gleichmäßig über den Umfang verteilt angeordnete Bodenbearbeitungswerkzeuge (25; 65; 85, 85'; 95; 105; 121, 121'; 123; 125, 125'; 205; 235) angebracht sind, jedes Bodenbearbeitungswerkzeug (25; 65; 85, 85'; 95; 105; 121, 121'; 123; 125, 125'; 205; 235) auf einer Welle (24; 64; 84; 94; 104), die in einem mit dem Werkzeugträger (22; 62; 82; 92; 102; 204; 234) verbundenen Halter (23, 23'; 63; 83; 93; 103) abgestützt ist, um seine Rotationsachse verdrehbar gelagert ist, und die die Bodenbearbeitungswerkzeuge (25; 65; 85, 85'; 95; 105; 121, 121'; 123; 125, 125'; 205; 235) tragenden Wellen (24; 64; 84; 94; 104) zur Rotationsachse (A) des Werkzeugträgers (22; 62; 82; 92; 102; 204; 234) geneigt verlaufend angeordnet sind, wobei die äußeren Bereiche der Bodenbearbeitungswerkzeuge (25; 65; 85, 85'; 95; 105; 121, 121'; 123; 125, 125'; 205, 235) den Boden bearbeiten,
**dadurch gekennzeichnet,**
daß die Bodenbearbeitungswerkzeuge (25; 65; 85, 85'; 95; 105; 121, 121'; 123; 125, 125'; 205; 235) als flache Scheiben ausgebildet sind und daß die Bodenbearbeitungswerkzeuge (25; 65; 85, 85'; 95; 105; 121, 121'; 123; 125, 125'; 205; 235) unter einem Winkel von 20 bis 40^{o} zur Bodenoberfläche (B) ausgerichtet sind.

2. Bodenbearbeitungsmaschine nach Anspruch 1,
**dadurch gekennzeichnet**,
daß der Werkzeugträger (22) eine in Fahrtrichtung (F) oder entgegen der Fahrtrichtung (F) der Bodenbearbeitungsmaschine (1) geneigt verlaufende Rotationsachse (A' bzw. A'') aufweist.

3. Bodenbearbeitungsmaschine nach Anspruch 2,
**dadurch gekennzeichnet**,
daß zur Neigung des Werkzeugträgers (22) der Tragrahmen (21) der Bodenbearbeitungsmaschine (1), beispielsweise mit Hilfe einer Servoeinrichtung (12), um eine etwa horizontal und senkrecht zur Fahrtrichtung (F) verlaufende, vorzugsweise an den Unterlenkern (13) des Zugfahrzeuges (2) vorgesehenen Achse (Bolzen 14), verschwenkbar gehalten ist.

4. Bodenbearbeitungsmaschine nach einem oder mehreren der Ansprüche 1 bis 3,
**dadurch gekennzeichnet**,
daß die Bodenbearbeitungswerkzeuge (25) einer Bodenbearbeitungsmaschine (1) gemeinsam an einem an dem Werkzeugträger (22) befestigten Halter (23) angebracht sind, der in Form eines Pyramiden- oder eines Kegelstumpfes ausgebildet ist.

5. Bodenbearbeitungsmaschine nach einem oder mehreren der Ansprüche 1 bis 3,
**dadurch gekennzeichnet**,
daß die Bodenbearbeitungswerkzeuge (25) einer Bodenbearbeitungsmaschine (1) jeweils an einem Halter (23') angebracht sind, der um eine horizontal verschwenkbare Achse (Bolzen 43), vorzugsweise entgegen der Kraft einer Feder (46), verstellbar an dem Werkzeugträger (22) befestigt ist.

6. Bodenbearbeitungsmaschine nach Anspruch 5,
**dadurch gekennzeichnet**,
daß die Endlage der Halter (23') jeweils durch einen Anschlag (44) begrenzt ist.

7. Bodenbearbeitungsmaschine nach Anspruch 5 oder 6,
**dadurch gekennzeichnet**,
daß die Halter (23') eines Werkzeugträgers (22) in unterschiedlichen Winkelstellungen arretierbar sind.

8. Bodenbearbeitungsmaschine nach einem oder mehreren der Ansprüche 1 bis 7,
**dadurch gekennzeichnet**,
daß die Bodenbearbeitungswerkzeuge (65) eines Werkzeugträgers (62) in einem vorzugsweise abgewinkelt ausgebildeten Träger (66) seitlich verschwenkbar gelagert sind, der gelenkig mit dem Werkzeugträger (62) verbunden ist.

9. Bodenbearbeitungsmaschine nach Anspruch 8,
**dadurch gekennzeichnet**,
daß auf der die Bodenbearbeitungswerkzeuge (65) tragenden Welle (64) vertikal über dem Träger (66) ein Stützglied (69), z. B. in Form eines verdrehbar gelagerten Stützrades, angeordnet ist.

10. Bodenbearbeitungsmaschine nach einem oder mehreren der Ansprüche 1 bis 9,
**dadurch gekennzeichnet**,
daß die an einem Werkzeugträger (82) angebrachten Bodenbearbeitungswerkzeuge (85, 85') in unterschiedlichen Höhenlagen angeordnet sind oder unterschiedliche Durchmesser aufweisen.

11. Bodenbearbeitungsmaschine nach Anspruch 10,
**dadurch gekennzeichnet**,
daß die Bodenbearbeitungswerkzeuge (85, 85') oberhalb und/oder unterhalb des Halters (83) mit gleichem oder unterschiedlichem Abstand zu diesem angeordnet sind.

12. Bodenbearbeitungsmaschine nach Anspruch 10 oder 11,
**dadurch gekennzeichnet**,
daß bei einem mit sechs Bodenbearbeitungswerkzeugen (85, 85') bestückten Werkzeugträger (82) die jeweils diametral einander gegenüberliegenden Bodenbearbeitungswerkzeuge (85, 85') in unterschiedlichen Höhenlagen angeordnet sind.

13. Bodenbearbeitungsmaschine nach einem oder mehreren der Ansprüche 1 bis 12,
**dadurch gekennzeichnet**,
daß der Werkzeugträger (22; 102) an seiner Unterseite mit einem vorzugsweise in der Höhe verstellbaren und in Form eines Gleittellers ausgebildeten Anschlages (41; 107) zur Einstellung der Eingriffstiefe der Bodenbearbeitungswerkzeuge (25; 105) versehen ist.

14. Bodenbearbeitungsmaschine nach einem oder mehreren der Ansprüche 1 bis 13,
**dadurch gekennzeichnet**,
daß bei mehreren in einem Tragrahmen (91) angeordneten Werkzeugträgern (92, 92', 92'', 92''') diese in Fahrtrichtung derart versetzt zueinander angeordnet sind, daß sich die Arbeitsbereiche der Bodenbearbeitungswerkzeuge (95) in den Randbereichen überdecken.

15. Bodenbearbeitungsmaschine nach einem oder mehreren der Ansprüche 1 bis 14,
**dadurch gekennzeichnet**,
daß die Bodenbearbeitungswerkzeuge (121, 121'; 123; 125, 125') in Form von gezahnten Scheiben (122, 122') als scheibenförmige Messer (124) oder als mit Bürsten (127) oder Federzinken (128) bestückte Scheiben (126) ausgebildet sind.

16. Bodenbearbeitungsmaschine nach einem oder mehreren der Ansprüche 1 bis 15,
**dadurch gekennzeichnet,**
daß vertikal über den Bodenbearbeitungswerkzeugen (205; 235) ein Putzwerkzeug in Form eines um eine vertikal gerichtete Achse (A) rotierend antreibbaren Bürstenrades (221; 251) oder einer um eine horizontal gerichtete Achse (B) rotierend antreibbaren Bürstenwalze (261) angordnet ist, dessen Bürsten (223; 252; 262) zumindest auf einer Seite über den Arbeitsbereich (C) der Bodenbearbeitungswerkzeuge (205; 235) überstehen.

17. Bodenbearbeitungsmaschine nach Anspruch 16,
**dadurch gekennzeichnet,**
daß das Bürstenrad (221) konzentrisch zu dem Werkzeugträger (204) unmittelbar an diesem oder einem diesem zugeordneten Tragrahmen, beispielsweise einem Schwenkarm (203) angeordnet ist.

18. Bodenbearbeitungsmaschine nach Anspruch 16 oder 17,
**dadurch gekennzeichnet,**
daß das Brüstenrad (221) drehfest mit dem Werkzeugträger (204) verbunden ist.

19. Bodenbearbeitungsmaschine nach einem oder mehreren der Ansprüche 16 bis 18,
**dadurch gekennzeichnet**,
daß die Bürsten (223) des Bürstenrades (221) parallel zu den der Rotationsachse (A) des Werkzeugträgers (204) geneigt angeordneten Bodenbearbeitungswerkzeugen (205) verlaufend ausgerichtet sind.

20. Bodenbearbeitungsmaschine nach Anspruch 16,
**dadurch gekennzeichnet,**
daß das Bürstenrad (251) exzentrisch zu dem Werkzeugträger (234) in dessen äußeren Bereich drehbar gelagert und trieblich mit dem Werkzeugträger (234) verbunden ist.

21. Bodenbearbeitungsmaschine nach Anspruch 20,
**dadurch gekennzeichnet**,
daß zur Triebverbindung des Bürstenrades (251) mit dem angetriebenen Werkzeugträger (234) ein Ketten- oder Riementrieb (252) vorgesehen ist.

22. Bodenbearbeitungsmaschine nach Anspruch 16,
**dadurch gekennzeichnet,**
daß die Bürstenwalze (261) auf einer in Fahrtrichtung nach außen geneigt verlaufenden Welle (264) angeordnet ist.

23. Bodenbearbeitungsmaschine nach Anspruch 22,
**dadurch gekennzeichnet,**
daß die Welle (264) der Bürstenwalze (261) mittels eines hydraulisch betätigbaren Rotationsmotors (263) antreibbar ist.

24. Bodenbearbeitungsmaschine nach einem oder mehreren der Ansprüche 16 bis 13,
**dadurch gekennzeichnet,**
daß das Bürstenrad (251) oder die Bürstenwalze auf einem an dem Tragrahmen oder dem Schwenkarm (233) abgestützten Hebel (242) angeordnet ist, der mittels einer Servoeinrichtung (243) vorzugsweise um die Achse (Welle 238) des Werkzeugträgers (234) gesteuert verschwenkbar ist.

25. Bodenbearbeitungsmaschine nach einem oder mehreren der Ansprüche 16 bis 23,
**dadurch gekennzeichnet,**
daß das Bürstenrad oder die Bürstenwalze (261) an einem an dem Tragrahmen oder dem Schwenkarm (233) vorgesehenen Schlitten (244) gehalten ist, der mittels einer Servoeinrichtung (246) vorzugsweise radial nach außen gesteuert verstellbar ist.

26. Bodenbearbeitungsmaschine nach einem oder mehreren der Ansprüche 16 bis 25,
**dadurch gekennzeichnet,**
daß das Bürstenrad (221; 251) mit gleicher Drehrichrung (P) wie der Werkzeugträger (204; 234) antreibbar ist.

27. Bodenbearbeitungsmaschine nach einem oder mehreren der Ansprüche 24 bis 26,
**dadurch gekennzeichnet,**
daß bei einem an einem Schwenkarm (203; 233) angeordneten und mit einem Tastfühler (210; 240) versehenen Werkzeugträger (204; 234) das Bürstenrad (221; 251) bzw. die Bürstenwalze derart angeordnet bzw. bemessen ist, daß dessen Bürsten (223; 252) nach außen über den Arbeitsbereich (D) des Tastfühlers (210; 240) überstehen.

28. Bodenbearbeitungsmaschine nach einem oder mehreren der Ansprüche 24 bis 27,
**dadurch gekennzeichnet,**
daß der Tastfühler (240) an ein Steuergerät (241) angeschlossen ist, mittels dem die dem Bürstenrad (251) oder der Bürstenwalze (261) zugeordnete Servoeinrichtung (243; 246) derart betätigbar ist, daß bei einer Verstellbewegung des Tastfühlers (240) das Bürstenrad (251) oder die Bürstenwalze (261) in Betriebsstellung ausfahrbar ist.

29. Bodenbearbeitungsmaschine nach einem oder mehreren der Ansprüche 16 bis 28,
**dadurch gekennzeichnet,**
daß die Bürsten (223; 252) des Bürstenrades (221; 251) jeweils aus einem oder mehreren radial gerichteten an einer Scheibe (252) angebrachten und in Umfangsrichtung elastisch verformbaren, vorzugsweise in Umfangsrichtung gekrümmt ausgebildeten Stäben oder Bändern aus einem witterungsbeständigen Kunststoff gebildet sind.

30. Bodenbearbeitungsmaschine nach einem oder mehreren der Ansprüche 16 bis 28,
**dadurch gekennzeichnet,**
daß die Bürstenwalze (261) durch eine Vielzahl von jeweils mit einem Ende an der antreibbaren Welle (264) angebrachter Gummilappen (262) gebildet ist.

## Claims

1. Ground working machine (1; 101; 201; 231) with one or more implement carriers (22; 62; 82; 92; 102; 204; 234) which rotate when driven and are mounted in a carrier frame (21; 91; 106) or on a swivel arm (203; 233), and which are equipped with disc-shaped ground working implements (25; 65; 85, 85'; 95; 105; 121, 121'; 123; 125, 125'; 205; 235), whereby the individual ground working implements (25; 65; 85, 85'; 95; 105; 121, 121'; 123; 125, 125'; 205; 235) are each designed as a circular disc, two or more ground working implements (25; 65; 85, 85'; 95; 105; 121, 121'; 123; 125, 125'; 205; 235) are distributed evenly around the circumference of an implement carrier (22; 62; 82; 92; 102; 204; 234), each ground working implement (25; 65; 85, 85'; 95; 105; 121, 121'; 123; 125, 125'; 205; 235) is mounted so it can rotate about its axis of rotation on a shaft (24; 64; 84; 94; 104) which is supported in a holder (23, 23'; 63; 83; 93; 103) connected to the implement carrier (22; 62; 82; 92; 102; 204; 234), and whereby the shafts (24; 64; 84; 94; 104) which support the ground working implements (25; 65; 85, 85'; 95; 105; 121, 121'; 123; 125, 125'; 205; 235) are inclined at an angle to the axis of rotation (A) of the implement carrier (22; 62; 82; 92; 102; 204; 234) so that the outermost parts of the ground working implements (25; 65; 85, 85'; 95; 105; 121, 121'; 123; 125, 125'; 205; 235) till the soil,
**characterised in that,**
the ground working implements (25; 65; 85, 85'; 95; 105; 121, 121'; 123; 125, 125'; 205; 235) are shaped like flat discs, and that the ground working implements (25; 65; 85, 85'; 95; 105; 121, 121'; 123; 125, 125'; 205; 235) describe an angle of 20° to 40° to the surface of the soil (B).

2. Ground working machine in accordance with Claim 1,
**characterised in that,**
the implement carrier (22) has an axis of rotation (A' or A'') which runs offset in the direction of travel (F) or opposite to the direction of travel (F) of the ground working machine (1).

3. Ground working machine in accordance with Claim 2,
**characterised in that,**
in order to incline the implement carrier (22), the carrier frame (21) of the ground working machine (1) is mounted on an axis (pin 14) which is provided, in a preferred embodiment, approximately horizontally and vertically to the direction of travel (F) on the lower drawbar arms (13) of the tractor vehicle (2) so the angle of the carrier frame (21) can be altered by means of a servo device (12), for example.

4. Ground working machine in accordance with one or more of Claims 1 to 3,
**characterised in that,**
the ground working implements (25) of a ground working machine (1) are all located on a holder (23) fixed onto the implement carrier (22), whereby the holder (23) is shaped like a frustum of a pyramid or cone.

5. Ground working machine in accordance with one or more of Claims 1 to 3,
**characterised in that,**
the ground working implements (25) of a ground working machine (1) are all located on a holder (23') which is attached in a movable fixture to the implement carrier (22) by means of an axis (pin 43) which can be swivelled horizontally, and which, in a preferred embodiment, is swivelled against the force of a spring.

6. Ground working machine in accordance with Claim 5,
**characterised in that,**
the limit position of the holder (23') is set by a stop (44) on either end.

7. Ground working machine in accordance with Claim 5 or Claim 6,
**characterised in that,**
the holder (23') of an implement carrier (22) can be locked in various angled settings.

8. Ground working machine in accordance with one or more of Claims 1 to 7,
**characterised in that,**
the ground working implements (65) of an implement carrier (62) are mounted in a carrier (66) so they can be swivelled laterally, whereby the carrier (66), in a preferred embodiment, has an angled end and is connected to the implement carrier (62) through a joint.

9. Ground working machine in accordance with Claim 8,
**characterised in that,**
a support member (69), for example in the form of a support wheel mounted so as to turn, is located on the shaft (64) which carries the ground working implements (65) and is positioned vertically above the carrier (66).

10. Ground working machine in accordance with one or more of Claims 1 to 9,
**characterised in that,**
the ground working implements (85, 85') attached to an implement carrier (82) are located at differing heights, or have differing diameters.

11. Ground working machine in accordance with Claim 10,
**characterised in that,**
the ground working implements (85, 85') are located above and/or underneath the holder (83) at equal or differing distances from the holder (83).

12. Ground working machine in accordance with Claim 10 or Claim 11,
**characterised in that,**
in an implement carrier (82) equipped with six ground working implements (85, 85'), the ground working implements (85, 85') are located diametrically opposite to one another and are at differing heights.

13. Ground working machine in accordance with one or more of Claims 1 to 12,
**characterised in that,**
the implement carrier (22; 102) has a stop (41; 107) on its underside for adjusting the depth of tilling of the ground working implements (25; 105), whereby, in a preferred embodiment, the height of the stop (41; 107) can be adjusted and the stop (41; 107) is shaped like a smooth plate.

14. Ground working machine in accordance with one or more of Claims 1 to 13,
**characterised in that,**
given several implement carriers (92, 92', 92'', 92''') in a carrier frame (91), the implement carriers (92, 92', 92'', 92''') are positioned offset to one another in the direction of travel so that the tilling zones of the ground working implements (95) intersect at their boundary zones.

15. Ground working machine in accordance with one or more of Claims 1 to 14,
**characterised in that,**
the ground working implements (121, 121'; 123; 125, 125') take the form of toothed discs (122, 122'), disc-shaped knives (124) or discs (126) fitted with brush tines (127) or spring tines (128).

16. Ground working machine in accordance with one or more of Claims 1 to 15,
**characterised in that,**
a cleaning implement in the form of a driven brush wheel (221; 251) rotating about a vertically aligned axis (A) or of a driven brush roller (261) rotating about a horizontally aligned axis (B) is located vertically above the ground working implements (205; 235), whereby the brushes (223; 252; 262) of the cleaning implement project beyond the tilling zone (C) of the ground working implements (205; 235) on at least one side.

17. Ground working machine in accordance with Claims 16,
**characterised in that,**
the brush wheel (221) is located concentrically to the implement carrier (204) and is fitted directly onto the implement carrier (204) or a carrier frame allocated to it, for example a swivel arm (203).

18. Ground working machine in accordance with Claim 16 or Claim 17,
**characterised in that,**
the brush wheel (221) is fixedly connected to the implement carrier (204).

19. Ground working machine in accordance with one or more of Claims 16 to 18,
**characterised in that,**
the brushes (223) of the brush wheel (221) are in parallel to the ground working implements (205) which are inclined at an angle to the axis of rotation (A) of the implement carrier (204).

20. Ground working machine in accordance with Claim 16,
**characterised in that,**
the brush wheel (251) is mounted eccentrically on the implement carrier (234) in its outer zone in such a way as to rotate and is in a driving connection with the implement carrier (234).

21. Ground working machine in accordance with Claim 20,
**characterised in that,**
a chain or belt drive (252) is provided in order to effect a driving connection between the brush wheel (251) and the driven implement carrier (234).

22. Ground working machine in accordance with Claim 16,
**characterised in that,**
the brush roller (261) is mounted on a shaft (264) which is inclined outwards in the direction of travel.

23. Ground working machine in accordance with Claim 22,
**characterised in that,**
the shaft (264) of the brush roller (264) can be driven by means of a hydraulically operating rotation motor (263).

24. Ground working machine in accordance with one or more of Claims 16 to 23,
**characterised in that,**
the brush wheel (251) or the brush roller is mounted on a lever (242) supported on the carrier frame or swivel arm (233), whereby the swivel angle of the lever (242) can be controlled by means of a servo device (243), with the lever (242) swiveling, in a preferred embodiment, about the axis (shaft 238) of the implement carrier (234).

25. Ground working machine in accordance with one or more of Claims 16 to 23,
**characterised in that,**
the brush wheel or brush roller (261) is attached to a slide (244) provided on the carrier frame or swivel arm (233), whereby the position of the slide (244) can be controlled by means of a servo device (246), with the slide (244) moving, in a preferred embodiment, radially outwards.

26. Ground working machine in accordance with one or more of Claims 16 to 25,
**characterised in that,**
the brush wheel (221; 251) can be driven with the same direction of rotation (P) as the implement carrier (204; 234).

27. Ground working machine in accordance with one or more of Claims 24 to 26,
**characterised in that,**
in an implement carrier (204; 234) which is attached to a swivel arm (203; 233) and has a feeler probe (210; 240), the brush wheel (221; 251) or the brush roller are positioned in such a way, or the size of the brush wheel (221; 251) or the brush roller is such, that their brushes (223; 252) project outwards beyond the operating range (D) of the feeler probe (210; 240).

28. Ground working machine in accordance with one or more of Claims 24 to 27,
**characterised in that,**
the feeler probe (240) is connected to a control unit (241) by means of which the corresponding servo device (243; 246) for the brush wheel (251) or the brush roller (261) can be operated in such a way that the brush wheel (251) or the brush roller (261) can be extended into its operating position when the feeler probe (240) makes an adjustment movement.

29. Ground working machine in accordance with one or more of Claims 16 to 28,
**characterised in that,**
the brushes (223; 252) of the brush wheel (221; 251) are each made from one or more rods or bands which are attached to a disc (252) in a radial alignment, which can undergo elastic deformation at their peripheral ends and which, in a preferred embodiment, are bent at their peripheral ends, whereby the rods or bands are made of a weatherproof plastic material.

30. Ground working machine in accordance with one or more of Claims 16 to 28,
**characterised in that,**
the brush roller (261) is made of a large number of rubber strips (262) attached by one end to the driven shaft (264).

## Revendications

1. Dispositif de labourage du sol (1; 101; 201; 231) avec un ou plusieurs porte-outils (22; 62; 82; 92; 102; 204; 234) retenus dans un cadre de support (21; 91; 106) ou dans un bras pivotant (203; 233) et entraînés en rotation, équipés d'outils de labourage du sol sous forme de disques (25; 65; 85, 85'; 95; 105; 205; 235), les outils de labourage individuels (25; 65; 85, 85'; 95; 105; 121, 121'; 123; 125, 125'; 205; 235) étant conçus respectivement sous forme d'un disque circulaire, un porte-outils 22; 62; 82; 92; 102; 204; 234) supportant respectivement deux ou plusieurs outils de labourage du sol (25; 65; 85, 85'; 95; 105; 205; 235) répartis uniformément sur le pourtour, chaque outil de labourage du sol (25; 65; 85, 85'; 95; 105; 121, 121'; 123; 125, 125; 205; 235) pouvant décrire un mouvement de rotation autour de son axe sur un arbre (24; 64; 84; 94; 104) s'appuyant dans un support (23, 23'; 63; 83; 93; 103) lié au porte-outils (22; 62; 82; 92; 102; 204; 234), et les arbres (24; 64; 84; 94; 104) qui supportent les outils de labourage du sol (25; 65; 85, 85'; 95; 105; 121, 121'; 123; 125, 125'; 205; 235) étant inclinés en direction de l'axe de rotation (A) du porte-outils (22; 62; 82; 92; 102; 204; 234), ce qui a pour effet que le sol est labouré par les extrémités des outils de labourage,
caractérisé en ce que
les outils de labourage du sol (25; 65; 85, 85'; 95; 105; 121, 121'; 123; 125, 125'; 205; 235) sont conçus sous forme de disques plats et que les outils de labourage du sol (25; 65; 85, 85'; 95; 105; 121, 121'; 123; 125, 125'; 205; 235) sont alignés sous un angle de 20° à 40° par rapport à la surface du sol labouré (B).

2. Dispositif de labourage du sol d'après la revendication 1,
caractérisé en ce que
le porte-outils (22) possède un axe de rotation (A' ou A'') incliné dans le sens de marche (F) ou dans le sens opposé (F) au sens de marche du dispositif de labourage du sol (1).

3. Dispositif de labourage du sol d'après la revendication 2,
caractérisé en ce que
pour l'inclinaison du porte-outils (22), le cadre de support (21) du dispositif de labourage du sol (1) est entraîné pivotant, au moyen p. ex. d'un équipement servo (12), autour d'un axe (boulon 14) prévu de préférence aux bras inférieurs (13) du véhicule de remorque (2) et orienté à peu près horizontalement et perpendiculairement au sens de marche (F).

4. Dispositif de labourage du sol d'après une ou plusieurs des revendications 1 à 3,
caractérisé en ce que
les outils de labourage du sol (25) d'un dispositif de labourage du sol (1) sont prévus ensemble sur un support (23) fixé au porte-outils (22), sous forme d'un tronc de pyramide ou de cône.

5. Dispositif de labourage du sol d'après une ou plusieurs des revendications 1 à 3,
caractérisé en ce que
les outils de labourage du sol (25) d'un dispositif de labourage du sol (1) sont prévus respectivement sur un support (23') qui est fixé sur le porte-outils (22) de manière à se laisser régler autour d'un axe (boulon 43) pivotant horizontalement, de préférence contre la force d'un ressort (46).

6. Dispositif de labourage du sol d'après la revendication 5,
caractérisé en ce que
les positions extrêmes des supports (23') sont déterminées par une butée (44).

7. Dispositif de labourage du sol d'après la revendication 5 ou 6,
caractérisé en ce que
les supports (23') d'un porte-outils (22) se laissent arrêter sous des angles différents.

8. Dispositif de labourage du sol d'après une ou plusieurs des revendications 1 à 7,
caractérisé en ce que
les outils de labourage du sol (65) d'un porte-outils (62) se laissent pivoter latéralement dans un support (66) conçu de préférence sous forme d'un coude et articulé sur le porte-outils (62).

9. Dispositif de labourage du sol d'après la revendication 8,
caractérisé en ce que
sur l'arbre (64) portant les outils de labourage du sol (65), il soit prévu verticalement au-dessus du support (66) un élément d'appui (69), p. ex. sous la forme d'une roue d'appui qui se laisse tourner.

10. Dispositif de labourage du sol d'après une ou plusieurs des revendications 1 à 9,
caractérisé en ce que
les outils de labourage du sol (85, 85') prévus sur un porte-outils (82) sont placés à des hauteurs différentes ou qu'ils aient des diamètres différents.

11. Dispositif de labourage du sol d'après la revendication 10,
caractérisé en ce que
les outils de labourage du sol (85, 85') sont disposés au-dessus et/ou en-dessous du support (83), à des distances égales ou différentes de celui-ci.

12. Dispositif de labourage du sol d'après la revendication 10 ou 11,
caractérisé en ce que
dans le cas d'un porte-outils (82) équipé de six outils de labourage du sol (85, 85'), les outils de labourage du sol diamétralement opposés (85, 85') sont disposés à de différentes hauteurs.

13. Dispositif de labourage du sol d'après une ou plusieurs des revendications 1 à 12,
caractérisé en ce que
sur son dessous, le porte-outils (22; 102) est équipé d'une bu- tée (41; 107) déplaçable de préférence en hauteur et conçu sous forme d'un plateau glissant, afin de per- mettre le réglage de la profondeur d'engrènement des outils de labourage du sol (25; 105).

14. Dispositif de labourage du sol d'après une ou plusieurs des revendications 1 à 13,
caractérisé en ce que
dans le cas de plusieurs porte-outils (92, 92', 92'', 92''') arrangés dans un cadre de support (91), les porte-outils sont décalés l'un par rapport à l'autre en direction de marche de sorte que les plages de travail des outils de labourage du sol (95) se superposent aux zones marginales.

15. Dispositif de labourage du sol d'après une ou plusieurs des revendications 1 à 14,
caractérisé en ce que
les outils de labourage du sol (121, 121'; 123; 125, 125') sous forme de disques dentés (122, 122') sont conçus en tant que disques coupants (124) ou en tant que disques (126) munis de brosses (127) ou de dents élastiques (128).

16. Dispositif de labourage du sol d'après une ou plusieurs des revendications 1 à 15,
caractérisé en ce que
verticalement au-dessus des outils de labourage du sol (205; 235), il soit prévu un outil de nettoyage sous forme d'une roue à brosses (221; 251) entraînée en rotation autour d'un axe (A) orienté en direction verticale, ou sous forme d'un rouleau à brosses (261) entraînée en rotation autour d'un axe (B) orienté en direction horizontale et dont les brosses (223; 252; 262) dépassent au moins d'un côté la plage de travail (C) des outils de labourage du sol (205; 235).

17. Dispositif de labourage du sol d'après la revendication 16,
caractérisé en ce que
la roue à brosses (221) soit placée en position concentrique par rapport au porte-outils (204), soit directement sur celui-ci, soit sur un cadre de support qui lui est assigné, comme par exemple un bras pivotant (203).

18. Dispositif de labourage du soi d'après la revendication 16 ou 17,
caractérisé en ce que
la roue à brosses (221) soit fixée sur le porte-outils (204) de sorte qu'elle ne tourne pas indépendamment.

19. Dispositif de labourage du sol d'après une ou plusieurs des revendications 16 à 18,
caractérisé en ce que
les brosses (223) de la roue à brosses (221) sont orientées parallèlement aux outils de labourage du sol (205) inclinés par rapport à l'axe de rotation (A) du porte-outils (204).

20. Dispositif de labourage du sol d'après la revendication 16,
caractérisé en ce que
la roue à brosses (251) soit placée en position excentrique par rapport au porte-outils (234), de sorte à tourner à l'endroit extérieur de la roue, et qu'elle soit liée par chaîne cinématique au porte-outils (234).

21. Dispositif de labourage du sol d'après la revendication 20,
caractérisé en ce que
pour la chaîne cinématique entre la roue à brosses (251) et le porte-outils entraîné (234), il soit prévu une chaîne ou une courroie de transmission (252).

22. Dispositif de labourage du sol d'après la revendication 16,
caractérisé en ce que
le rouleau à brosses (261) soit disposé sur un arbre (264) incliné vers l'extérieur en direction de marche.

23. Dispositif de labourage du sol d'après la revendication 22,
caractérisé en ce que
l'arbre (262) du rouleau à brosses (261) soit entraîné au moyen d'un moteur à rotation (263) actionné hydrauliquement.

24. Dispositif de labourage du sol d'après une ou plusieurs des revendications 16 à 23,
caractérisé en ce que
la roue à brosses (251) ou le rouleau à brosses sont disposés sur un levier (242) s'appuyant sur le cadre de support ou le bras pivotant (233) et qui, au moyen d'un équipement servo (243), se laisse commander de préférence en pivotant autour de l'axe (arbre 238) du porte-outils (234).

25. Dispositif de labourage du sol d'après une ou plusieurs des revendications 16 à 23,
caractérisé en ce que
la roue à brosses ou le rouleau à brosses (261) sont retenus sur un chariot (244) prévu sur le cadre de support ou le bras pivotant (233), et qui se laisse commander de préférence radialement vers l'extérieur au moyen d'un équipement servo (246).

26. Dispositif de labourage du sol d'après une ou plusieurs des revendications 16 à 25,
caractérisé en ce que
la roue à brosses (221; 251) se laisse entraîner dans le même sens (P) que le porte-outils (204; 234).

27. Dispositif de labourage du sol d'après une ou plusieurs des revendications 24 à 26,
caractérisé en ce que
dans le cas d'un porte-outils (204; 234) disposé sur un bras pivotant (203; 233) et équipé d'un palpeur à contact (210; 240), la roue à brosses (221; 251) ou le rouleau à brosses sont arrangés ou dimensionnés de sorte que leurs brosses (223; 252) dépassent la plage de travail (D) du palpeur à contact (210; 240) vers l'extérieur.

28. Dispositif de labourage du soi d'après une ou plusieurs des revendications 24 à 27,
caractérisé en ce que
le palpeur à contact (240) soit raccordé à un appareil de commande (241) à l'aide duquel l'équipement servo (243; 246) assigné à la roue à brosses (251) ou au rouleau à brosses (261) se laisse commander de sorte qu'en cas de mouvement du palpeur à contact (240), la roue à brosses (251) ou le rouleau à brosses (261) se laissent déployer en position de service.

29. Dispositif de labourage du sol d'après une ou plusieurs des revendications 16 à 28,
caractérisé en ce que
les brosses (223; 252) de la roue à brosses (221; 251) consistent respectivement d'une ou de plusieurs barres ou bandes en matière synthétique élastique résistant aux intempéries, qui sont orientées radialement et prévues sur un disque (252), qui se laissent déformer en direction du pourtour et qui sont courbées de préférence en direction du pourtour.

30. Dispositif de labourage du sol d'après une ou plusieurs des revendications 16 à 28,
caractérisé en ce que
le rouleau à brosses (261) soit formé par une multitude de languettes en caoutchouc (262) dont une extrémité respective est fixée sur l'arbre entraînable (264).
